# EUROPEAN PATENT APPLICATION

(11) **EP 4 608 051 A1**
(43) Date of publication of application: **27.08.2025**
(21) Application number: 22962415.0
(22) Date of filing: 20.10.2022
(51) Int. Cl.: H04W 76/10, H04W 52/02

(54) **SIGNAL SENDING METHOD AND APPARATUS, AND SIGNAL RECEIVING METHOD AND APPARATUS**

(71) Applicant: Beijing Xiaomi Mobile Software Co., Ltd., Beijing 100085 (CN)
(72) Inventor: GUO, Shengxiang, Beijing 100085 (CN)
(74) Representative: Dehns Germany Partnerschaft mbB
(86) International application number: PCT/CN2022/126511
(87) International publication number: WO 2024/082228

(57) **Abstract**

The present application relates to the field of mobile communications. Disclosed are a signal sending method and apparatus, and a signal receiving method and apparatus. The method comprises: a terminal sending a power-saving response signal, which indicates whether at least one main receiver or main transceiver of the terminal has been woken up. The present application provides a solution of a terminal reporting a power-saving response signal for indicating whether a main receiver or a main transceiver of the terminal itself has been woken up, and ensures that an access network device can determine, according to the power-saving response signal, whether the terminal supports to be scheduled, such that the accuracy of the access network device scheduling the terminal is improved, and the waste of resources caused by the access network device failing to schedule the terminal due to the terminal not being woken up is prevented, thereby saving on resources.

## Description

### TECHNICAL FIELD

The disclosure relates to the field of mobile communication, in particular to a signal sending method, a signal sending apparatus, a signal receiving method and a signal receiving apparatus.

### BACKGROUND

In a mobile communication system, a terminal may be triggered as to whether it need to start processing uplink data and downlink data normally by introducing a power saving signal. An access network device may trigger the terminal to process uplink data and downlink data by sending a power saving signal to the terminal, which subsequently requires the access network device to schedule transmission resources for the terminal. However, how the access network device schedules transmission resources for the terminal remains an unsolved problem.

### SUMMARY

The embodiments of the disclosure provide a signal sending method, a signal sending apparatus, a signal receiving method and a signal receiving apparatus, to ensure that an access network device can determine whether a terminal supports scheduling according to a power saving response signal, which improves the accuracy of the access network device in scheduling the terminal, and prevents the problem of resource waste when the access network device cannot schedule the terminal due to the terminal not being awakened, thereby saving resources. The technical solutions are provided below.

According to a first aspect of the disclosure, a signal sending method is provided. The method is performed by a terminal, and includes:
sending a power saving response signal, in which the power saving response signal indicates whether at least one main receiver or main transceiver of the terminal is woken up.

According to a second aspect of the disclosure, a signal receiving method is provided. The method is performed by an access network device, and includes:
receiving a power saving response signal, in which the power saving response signal indicates whether at least one main receiver or main transceiver of a terminal is woken up.

According to a third aspect of the disclosure, a signal sending apparatus is provided. The apparatus includes:
a sending module, configured to send a power saving response signal, in which the power saving response signal indicates whether at least one main receiver or main transceiver of a terminal is woken up.

According to a fourth aspect of the disclosure, a signal receiving apparatus is provided. The apparatus includes:
a receiving module, configured to receive a power saving response signal, in which the power saving response signal indicates whether at least one main receiver or main transceiver of a terminal is woken up.

According to a fifth aspect of the disclosure, a terminal is provided. The terminal includes: a processor, a transceiver connected to the processor and a memory for storing instructions executable by the processor. The processor is configured to load and execute the executable instructions to implement the signal sending method of the first aspect.

According to a sixth aspect of the disclosure, an access network device is provided. The access network device includes: a processor, a transceiver connected to the processor and a memory for storing instructions executable by the processor. The processor is configured to load and execute the executable instructions to implement the signal receiving method of the second aspect.

According to a seventh aspect of the disclosure, a communication system is provided. The communication system includes a terminal and an access network device. The terminal is used to implement the signal sending method as described in the first aspect, and the access network device is used to implement the signal receiving method as described in the second aspect.

According to an eighth aspect of the disclosure, a computer-readable storage medium is provided. The readable storage medium stores executable program codes. The executable program codes are loaded and executed by a processor to implement the signal receiving method or the signal sending method as described above.

According to a ninth aspect of the disclosure, a chip is provided. The chip includes a programmable logic circuit and/or program instructions. When the chip runs on a terminal or an access network device, the signal receiving method or the signal sending method as described above is implemented.

According to a tenth aspect of the disclosure, a computer program product is provided. When the computer program product is executed by a processor of a terminal or an access network device, the signal receiving method or the signal sending method as described above is implemented.

The disclosure provides a scheme for the terminal to send the power saving response signal to inform the access network device whether the main receiver or the main transceiver is awaken, so that the access network device can determine whether the terminal supports scheduling according to the power saving response signal, which improves the accuracy of the access network device in scheduling the terminal, and prevents the problem of resource waste when the access network device cannot schedule the terminal due to the terminal not being awakened, thereby saving resources.

### BRIEF DESCRIPTION OF THE DRAWINGS

In order to more clearly illustrate the technical solutions in the embodiments of the disclosure, the drawings required for use in the description of the embodiments will be briefly introduced below. Obviously, the drawings described below are only some embodiments of the disclosure. For those skilled in this field, other drawings can be obtained based on the drawings without inventive works.
FIG. 1 is a block diagram of a communication system provided by an exemplary embodiment of the disclosure.
FIG. 2 is a flowchart of a signal sending method provided by an exemplary embodiment of the disclosure.
FIG. 3 is a block diagram of a signal sending apparatus provided by an exemplary embodiment of the disclosure.
FIG. 4 is a block diagram of another signal sending apparatus provided by an exemplary embodiment of the disclosure.
FIG. 5 is a block diagram of a signal receiving apparatus provided by an exemplary embodiment of the disclosure.
FIG. 6 is a block diagram of another signal receiving apparatus provided by an exemplary embodiment of the disclosure.
FIG. 7 is a schematic diagram of a communication device provided by an exemplary embodiment of the disclosure.

### DETAILED DESCRIPTION

In order to make the purposes, technical schemes and advantages of the disclosure more clear, the embodiments of the disclosure will be further described in detail in combination with the attached drawings.

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the disclosure. Instead, they are merely examples of apparatuses and methods consistent with aspects related to the disclosure as recited in the appended claims.

The terms in the disclosure are only for the purpose of describing specific embodiments, and are not intended to limit the disclosure. The singular forms of "a" and "the" used in the disclosure and appended claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein may be interpreted as "when", "while" or "in response to determining".

It should be noted that the information (including but not limited to user equipment information, user personal information, etc.), data (including but not limited to data used for analysis, stored data, displayed data, etc.) and signals involved in the disclosure are all authorized by the user or fully authorized by all parties. The collection, usage and processing of relevant data all comply with relevant laws, regulations and standards of relevant countries and regions.

The terms involved in the disclosure are explained first.

Power saving signal: a main receiver or a main transceiver of a terminal may be in a sleep state when it does not need to process data, and an access network device may wake up the main receiver or the main transceiver by the power saving signal so as to facilitate the terminal to save resources when it does not need to process data. In some embodiments, the power saving signal may be a Wake Up Signal (WUS), a Low Power (LP) WUS, a Paging Early Indication (PEI) signal, a downlink control information (DCI) for power saving (DCP) signal or any other signals, which is not limited in the embodiment of the disclosure.

Power saving response signal: the terminal may wake up its own main receiver or main transceiver, i.e., it may switch the main receiver or the main transceiver from the sleep state to a wake-up state. For the terminal, it may report the state of whether its own main receiver or main transceiver has been woken up to the access network device through the power saving response signal.

In some embodiments, the access network device wakes up the main receiver or main transceiver of the terminal by sending the power saving signal to the terminal. In response to the power saving signal, the terminal sends the power saving response signal to the access network device, to inform the access network device whether its own main receiver or main transceiver has been woken up.

Main receiver: if the terminal needs to receive downlink data sent by the access network device, it may receive the downlink data through the main receiver, and may also process the downlink data through the main receiver. It should be noted that the terminal also includes a corresponding auxiliary receiver, which can receive a power saving signal sent by the access network device.

Main transceiver: if the terminal needs to receive downlink data sent by the access network device or send uplink data to the access network device, it may receive the downlink data sent by the access network device through the main transceiver or may send the uplink data to the access network device through the main transceiver. It should be noted that the terminal also includes a corresponding auxiliary transceiver, which can receive a power saving signal sent by the access network device.

Secondly, the application scenarios of the disclosure are described below.

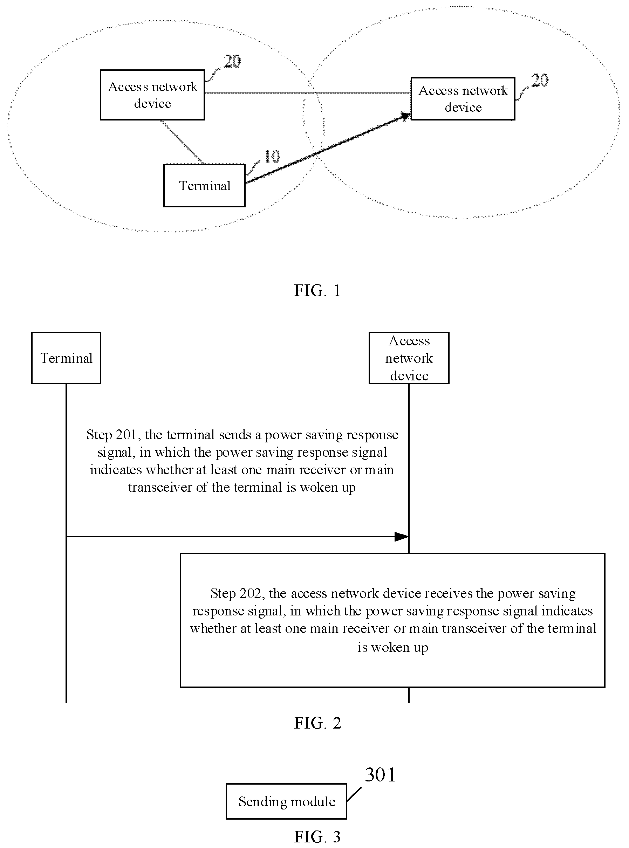

FIG. 1 is a block diagram of a communication system provided by an exemplary embodiment of the disclosure. The communication system includes a terminal 10 and an access network device 20.

Usually, there are a plurality of terminals 10, and one or more terminals 10 may be distributed within the cell managed by each access network device 20. The terminal 10 may include various handheld devices in-vehicle devices, wearable devices, computing devices or other processing devices connected to a wireless modem with wireless communication capabilities, as well as various forms of User Equipment (UE), Mobile Station (MS) and the like. For convenience of description, in the embodiment of the disclosure, the above-mentioned devices are collectively referred to as a terminal.

The access network device 20 refers to devices deployed in an access network to provide wireless communication functions for the terminal 10. For convenience of description, in the embodiment of the disclosure, the above-mentioned devices that are used to provide wireless communication functions for the terminal 10 are collectively referred to as the access network device. A connection may be established between the access network device 20 and the terminal 10 via an air interface, whereby communication, including signaling and data interaction, may be carried out via the connection. There may be a plurality of access network devices 20, and communication between two neighboring access network devices 20 may also be carried out by a wired or wireless means. The terminal 10 may send beam reports between different access network devices 20, i.e. establish connections with different access network devices 20.

The access network device 20 may include various forms of macro base stations, micro base stations, relay stations, access points, and the like. The name of the device having the function of an access network device may vary in systems using different radio access technologies. For example, in a 5G New Radio (NR) system, it is called gNodeB (gNB). As communication technologies evolve, the name of "access network device" may change.

The "5G NR system" in the embodiment of the disclosure may also be referred to as a 5G system or a NR system, but those skilled in the art may understand the meaning thereof. The technical scheme described in the embodiment of the disclosure may be applied to a 5G NR system or a future evolved systems of the 5G NR system.

FIG. 2 is a flowchart of a signal sending method provided by an exemplary embodiment of the disclosure. For example, the method can be applied to the terminal or the access network device as shown in FIG. 1. The method includes at least part of the following contents.

At step 201, the terminal sends a power saving response signal, in which the power saving response signal indicates whether at least one main receiver or main transceiver of the terminal is woken up.

At step 202, the access network device receives the power saving response signal, in which the power saving response signal indicates whether at least one main receiver or main transceiver of the terminal is woken up.

The power saving response signal indicates whether the at least one main receiver or main transceiver of the terminal is woken up. That is, the terminal can inform the access network device whether its main receiver or main transceiver is woken up through the power saving response signal. In some embodiments, the main receiver is used to process downlink data. The main transceiver is used to process uplink data and/or downlink data.

In some embodiments, the terminal may be configured with one main receiver, two main receivers or four main receivers, which is not limited by the embodiment of the disclosure. Or correspondingly, the terminal is configured with one main transceiver, two main transceivers or four main transceivers.

In some embodiments, the power saving response signal is also called a LP wake up response signal.

In some embodiments, the power saving response signal is carried in a Physical Uplink Control Channel (PUCCH) or a Physical Uplink Shared Channel (PUSCH), or in other information, which is not limited by the embodiment of the disclosure.

It should be noted that the steps performed by the terminal in the embodiment of the disclosure may constitute a new independent embodiment, and the steps performed by the access network device may also constitute a new independent embodiment.

The disclosure provides a scheme for a terminal to report a power saving response signal indicating whether it wakes up the main receiver or the main transceiver, ensuring that the access network device can determine whether the terminal supports scheduling based to the power saving response signal, improving the accuracy of scheduling of the terminal by the access network device, and preventing a situation in which resources are wasted due to the failure of the terminal to wake up and the inability of the access network device to schedule the terminal, and saving resources.

It should be noted that the above embodiments are illustrated as an example of a terminal reporting whether or not its own main receiver or main transceiver is waken up via the power saving response signal. And before the terminal sends the power saving response signal, the access network device may also send a power saving signal. The power saving signal indicates whether the terminal wakes up. After performing an operation according to the power saving signal, the terminal sends the power saving response signal in response to the power saving signal.

In the scheme provided by the disclosure, the terminal determines whether to wake up the main receiver or the main transceiver according to the received power saving signal. In this way, the reliability of communication is improved.

The embodiment shown in FIG. 2 provides an illustration of the terminal reports a power saving response signal. An illustration of how the power saving response signal indicates whether the main receiver or the main transceiver is woken up is provided below.

In some embodiments, the power saving response signal indicates by default that at least one master receiver or master transceiver is woken up.

In the embodiment of the disclosure, the terminal sends the power saving response signal. If the access network device receives the power saving response signal, it determines by default that at least one main receiver or main transceiver of the terminal is woken up. That is, the terminal only needs to send a power saving response signal to inform whether at least one of its own main receivers or main transceivers is woken up, and there is no need to carry other information in the power saving response signal.

In some embodiments, the power saving response signal also indicates whether a corresponding main receiver or main transceiver is woken up.

In the embodiment of the disclosure, the power saving response signal corresponds to a main receiver or main transceiver, and the power saving response signal indicates whether the corresponding main receiver or main transceiver is woken up.

For example, 1 bit of the power saving response signal indicates whether a corresponding main receiver or main transceiver is woken up. For example, if the bit is 1, it indicates that its corresponding main receiver or main transceiver is woken up. If the bit is 0, it indicates that the corresponding main receiver or main transceiver is not woken up. Or, if the bit is 0, it may indicate that the corresponding main receiver or main transceiver is woken up, and if the bit is 1, it indicates that the corresponding main receiver or main transceiver is not woken up.

Optionally, the power saving response signal may also include an identifier (ID) of the main receiver or the main transceiver, which indicates the main receiver or the main transceiver, so that the terminal can determine the main receiver or the main transceiver corresponding to the power saving signal according to the ID.

Optionally, the power saving response signal includes at least one indication information that indicates whether a corresponding main receiver or main transceiver is woken up.

In the embodiment of the disclosure, the terminal may carry indication information in the power saving response signal, to explicitly indicate whether each main receiver or main transceiver is woken up.

Optionally, the number of indication information included in the power saving response signal is the same as the number of main receivers or main transceivers configured by the terminal. That is, the indication information included in the power saving response signal has a one-to-one relationship with the main receivers or main transceivers.

For example, each indication information is 1 bit. If the bit is 1, it indicates that the corresponding main receiver or main transceiver is woken up, and if the bit is 0, it indicates that the corresponding main receiver or main transceiver is not woken up. Or, if the bit is 0, it indicates that the corresponding main receiver or main transceiver is woken up, and if the bit is 1, it indicates that the corresponding main receiver or main transceiver is not woken up.

For example, taking an example of waking up one main receiver configured for the terminal, if the terminal is configured with one main receiver, the power saving response signal sent by the terminal includes one bit. If the bit is 1, it indicates that the corresponding main receiver is woken up, and if the bit is 0, it indicates that the corresponding main receiver is not woken up. For another example, taking an example of waking up two main receivers configured for the terminal, if the terminal is configured with two main receivers, the power saving response signal sent by the terminal includes two bits. If the first bit is 1, it indicates that the corresponding main receiver is woken up, and if the second bit is 0, it indicates that the other main receiver is not woken up.

The disclosure provides various schemes involving the power saving response signal, and proposes different methods for the terminal to report whether its main receiver or main transceiver is woken up, which ensures the accuracy of the terminal in reporting the state of its own main receiver or main transceiver.

In the embodiment shown in FIG. 2, the terminal reports the power saving response signal. The scheme of scheduling transmission resources for the terminal is explained below.

In the embodiment of the disclosure, data transmission is required between the terminal and the access network device, and the transmission requires transmission resources, and the access network device may schedule the transmission resources for the terminal via scheduling information.

In some embodiments, the access network device sends the scheduling information, which is used to schedule the transmission resources, and the terminal receives the scheduling information and determines the transmission resources according to the received scheduling information.

In some embodiments, the access network device sends the scheduling information after receiving the power saving response signal, and the terminal receives the scheduling information sent after the access network device receives the power saving response signal.

The terminal does not expect the access network device to send the scheduling information. The scheduling information will not be sent before the access network device receives the power saving response signal. That is, the terminal does not expect the access network device to send the scheduling information before receiving the power saving response signal.

In some embodiments, the terminal does not expect the access network device to send the scheduling information. The scheduling information will not be sent before the terminal sends the power saving response signal. That is, the terminal does not expect the access network device to send the scheduling information before the terminal sends the power saving response signal.

In the embodiment of the disclosure, the terminal may confirm whether at least one main receiver or main transceiver is woken up and then sends the power saving response signal. After receiving the power saving response signal, the access network device determines that at least one main receiver or main transceiver of the terminal is woken up and then sends the scheduling information to the terminal, so that the terminal can determine the transmission resources according to the scheduling information.

Optionally, the access network device immediately sends the scheduling information to the terminal after receiving the power saving response signal.

For example, the scheduling information includes control information carried by a Physical Downlink Control Channel (PDCCH), control information for scheduling a Physical Downlink Shared Channel (PDSCH) and/or control information for scheduling a PUSCH. For another example, the scheduling information includes at least one of a PDSCH and Semi Persistent scheduling (SPS).

In some embodiments, the access network device sends the scheduling information after a first duration of receiving the power saving response signal, so the terminal receives the scheduling information, which is sent after the first duration of receiving the power saving response signal by the access network device.

In some embodiments, the terminal does not expect the access network device to send the scheduling information until a first duration after receiving the power saving response signal. That is, the terminal does not expect the access network device to send the scheduling information, and the scheduling information is not be sent until the first duration after the power saving response signal is received by the access network device.

In some embodiments, the terminal does not expect the access network device to send the scheduling information until a first duration after sending the power saving response signal by the terminal. That is, the terminal does not expect the access network device to send the scheduling information, and the scheduling information is not be sent until the first duration after the power saving response signal is sent by the terminal.

The first duration is agreed upon by a communication protocol, or configured by the access network device, or configured by the terminal, which is not limited by the embodiment of the disclosure.

The first duration is an absolute value of time. For example, the first duration is 3ms (milliseconds), 4ms or other values. Or, the first duration is represented by a time domain ID. For example, the first duration is represented by a slot or a symbol.

In the embodiment of the disclosure, the terminal reports whether the at least one of its own main receivers or main transceivers is woken up by sending the power saving response signal, and the access network device sends the scheduling information after the first duration after receiving the power saving response signal.

For example, the access network device receives the power saving response signal at the current time, and then after 5ms, sends the scheduling information.

How the terminal does not expect to receive the scheduling information will be explained in detail below.

In some embodiments, the access network device does not send the scheduling information before receiving the power saving response signal, and the terminal does not expect to receive the scheduling information.

In the embodiment of the disclosure, the access network device waits for the power saving response signal sent by the terminal before receiving the power saving response signal, so the access network device does not send the scheduling information, and the terminal does not expect to receive the scheduling information before this time.

In some embodiments, the access network device does not send the scheduling information before the first duration after receiving the power saving response signal, and the terminal does not expect to receive the scheduling information.

In the embodiment of the disclosure, after receiving the power saving response signal, the access network device does not send the scheduling information within the first duration, and the terminal does not expect to receive the scheduling information.

In the scheme provided by the embodiment of the disclosure, the terminal receives the scheduling information within a specified duration to determine the scheduled transmission resources, which ensures the accuracy of scheduling transmission resources.

In the embodiment of FIG. 2, the terminal sends the power saving response signal. The following describes when the terminal sends the power saving response signal.

In some embodiments, the terminal sends the power saving response signal after waking up at least one main receiver or main transceiver. That is, the power saving response signal is sent by the terminal after waking up the at least one main receiver or main transceiver.

In the embodiment of the disclosure, the terminal wakes up at least one main receiver or main transceiver, and then sends a power saving response signal after waking up the at least one main receiver or main transceiver.

In other embodiments, the terminal sends the power saving response signal includes at least one of the following:
(1) after receiving a power saving signal and decoding the power saving signal, the terminal sends the power saving response signal, in which the power saving signal is used to wake up at least one main receiver or main transceiver of the terminal;
   In the embodiment of the disclosure, the terminal receives the power saving signal, the power saving signal is used to wake up at least one main receiver or main transceiver of the terminal. After receiving the power saving signal and decoding the power saving signal, the terminal sends the power saving response signal. That is, the terminal determines that at least one main receiver or main transceiver can be woken up when it confirms that decoding of the power saving signal is complete, and the terminal in turn sends a power saving response signal informing the access network device whether the terminal wakes up the at least one main receiver or main transceiver.
(2) after receiving the power saving signal and completing the decoding of the power saving signal for a second duration, the terminal sends the power saving response signal;
   In the embodiment of the disclosure, the terminal receives the power saving signal, the power saving signal is used to wake up at least one main receiver or main transceiver of the terminal. After the terminal receives the power saving signal and complete the decoding of the power saving signal for the second duration, the terminal sends the power saving response signal. That is, the terminal determines that at least one main receiver or main transceiver can be woken up when it confirms that decoding of the power saving signal is complete, and the terminal in turn sends a power saving response signal at a second duration after decoding the power saving signal to inform the access network device whether the terminal wakes up the at least one main receiver or main transceiver.
   The second duration is an absolute value of time. For example, the second duration is 3ms, 4ms or other values. Or, the second duration is represented by a time domain ID. For example, the second duration is represented by a slot or a symbol.
(3) after receiving the power saving signal and after a second duration, the terminal sends the power saving response signal; or
   In the embodiment of the disclosure, the terminal receives the power saving signal, the power saving signal is used to wake up at least one main receiver or main transceiver of the terminal. After receiving the power saving signal and after the second duration, the terminal sends the power saving response signal. That is, the terminal determines that at least one main receiver or main transceiver can be woken up when it confirms that decoding of the power saving signal is complete, and the terminal in turn sends a power saving response signal at a second duration after receiving the power saving signal to inform the access network device whether the terminal wakes up the at least one main receiver or main transceiver.
(4) after receiving the power saving signal, the terminal sends the power saving response signal.

In the embodiment of the disclosure, the terminal receives the power saving signal, the power saving signal is used to wake up at least one main receiver or main transceiver of the terminal. After receiving the power saving signal, the terminal sends the power saving response signal. That is, after receiving the power saving signal, the terminal sends the power saving response signal to inform the access network device whether the terminal wakes up the at least one main receiver or main transceiver.

In the solution provided in the embodiment of the disclosure, the terminal determines a time for sending the power saving response signal, and then send the power saving response signal at the time to inform whether the terminal wakes up the at least one main receiver or main transceiver, thereby improving the accuracy of the terminal in reporting.

It should be noted that the above embodiments may be split into new embodiments, or combined with other embodiments to form new embodiments. The combinations of embodiments are not limited in the embodiment of the disclosure.

FIG. 3 is a block diagram of a signal sending apparatus provided by an exemplary embodiment of the disclosure. As illustrated in FIG. 3, the apparatus includes:
a sending module 301, configured to send a power saving response signal, in which the power saving response signal is configured to indicate whether at least one main receiver or main transceiver of a terminal is woken up.

In some embodiments, the power saving response signal also indicates whether a corresponding main receiver or main transceiver is woken up.

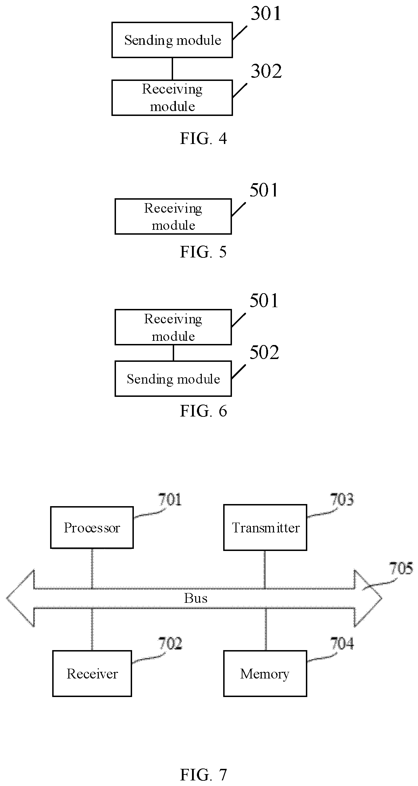

In some embodiments, as illustrated in FIG. 4, the apparatus further includes:
a receiving module 302, configured to receive scheduling information, in which the scheduling information is used for scheduling transmission resources.

In some embodiments, as illustrated in FIG. 4, the apparatus further includes:
a receiving module 302, configured to not expect an access network device to send scheduling information, in which the scheduling information is used for scheduling transmission resources.

In some embodiments, the sending module 301 is further configured to: send the power saving response signal after waking up the at least one main receiver or main transceiver.

It should be noted that the apparatus provided in the above embodiment, when implementing its functions, only uses the classification of the above-mentioned functional modules as an example. In actual applications, the above-mentioned functions are allocated to different functional modules as needed. That is, the internal structure of the apparatus are divided into different functional modules to complete all or part of the functions described above. Moreover, the apparatus embodiments and the method embodiments provided in the above embodiments belong to the same concept, and the specific implementations of the apparatus embodiments are described in detail in the method embodiments, which will not be repeated here.

FIG. 5 is a block diagram of a signal receiving apparatus provided by an exemplary embodiment of the disclosure. As illustrated in FIG. 5, the apparatus includes:
a receiving module 501, configured to receive a power saving response signal, in which the power saving response signal indicates whether at least one main receiver or main transceiver of a terminal is woken up.

In some embodiments, the power saving response signal also indicates whether a corresponding main receiver or main transceiver is woken up.

In some embodiments, as illustrated in FIG. 6, the apparatus further includes:
a sending module 502, configured to send scheduling information, in which the scheduling information is used for scheduling transmission resources.

In some embodiments, as illustrated in FIG. 6, the apparatus further includes:
a sending module 502, configured to not send scheduling information, in which the scheduling information is used for scheduling transmission resources.

In some embodiments, the power saving response signal is sent after the terminal wakes up the at least one main receiver or main transceiver.

It should be noted that the apparatus provided in the above embodiment, when implementing its functions, only uses the classification of the above-mentioned functional modules as an example. In actual applications, the above-mentioned functions are allocated to different functional modules as needed. That is, the internal structure of the apparatus are divided into different functional modules to complete all or part of the functions described above. Moreover, the apparatus embodiments and the method embodiments provided in the above embodiments belong to the same concept, and the specific implementations of the apparatus embodiments are described in detail in the method embodiments, which will not be repeated here.

FIG. 7 is a schematic diagram of a communication device provided by an exemplary embodiment of the disclosure. The communication device includes: a processor 701, a receiver 702, a transmitter 703, a memory 704 and a bus 705.

The processor 701 includes one or more processing cores, and it executes various functional applications and information processing by running software programs and modules.

The receiver 702 and the transmitter 703 may be realized as a communication component, which can be a communication chip.

The memory 704 is connected to the processor 701 through the bus 705.

The memory 704 is used to store at least one program code, and the processor 701 is used to execute the at least one program code to realize the steps in the above method embodiments.

Moreover, the communication device may be a terminal or an access network device. The memory 704 can be realized by any type of volatile or nonvolatile storage device or a combination thereof. The volatile or nonvolatile storage device includes, but is not limited to, a magnetic disk or optical disk, an electrically erasable programmable read-only memory (EEPROM), an erasable programmable read-only memory (EPROM), a static random access memory (SRAM), a read-only memory (ROM), a magnetic memory, a flash memory, and a programmable read-only memory (PROM).

In an exemplary embodiment, a computer-readable storage medium having executable program codes stored thereon is provided. When the executable program codes are loaded and executed by a processor, the signal sending method or the signal receiving method executed by the communication device provided by the above method embodiments is implemented.

In an exemplary embodiment, a chip is provided. The chip includes a programmable logic circuit and/or a program instruction. When the chip runs on a terminal or an access network device, the signal sending method or the signal receiving method provided by the above method embodiments is implemented.

In an exemplary embodiment, a communication system is provided. The communication system includes a terminal and an access network device. The terminal is used for implementing the signal sending method as described above, and the access network device is used for implementing the signal receiving method as described above.

In an exemplary embodiment, a computer program product is provided. When the computer program product is executed by a processor of a terminal or an access network device, the signal sending method or the signal receiving method provided by the above method embodiments is implemented.

Those skilled in the art understand that all or part of the steps to implement the above embodiments may be accomplished by hardware or by instructing related hardware through a program. The program may be stored in a computer-readable storage medium, which may be a ROM, a disk or an optical disk, etc.

Only optional embodiments of the disclosure are described above, and they are not used to limit the disclosure. Any modification, equivalent substitution, improvement, etc. made within the spirit and principle of the disclosure should be included in the protection scope of the disclosure.

## Claims

1. A signal sending method, performed by a terminal, comprising:
sending a power saving response signal, wherein the power saving response signal indicates whether at least one main receiver or main transceiver of the terminal is woken up.

2. The method of claim 1, wherein the power saving response signal further indicates whether a corresponding main receiver or main transceiver is woken up.

3. The method of claim 1 or 2, further comprising:
receiving scheduling information, wherein the scheduling information is used for scheduling transmission resources.

4. The method of claim 1 or 2, further comprising:
withholding from expecting an access network device to send scheduling information, wherein the scheduling information is used for scheduling transmission resources.

5. The method of any one of claims 1-4, wherein sending the power saving response signal comprises:
sending the power saving response signal after waking up the at least one main receiver or main transceiver.

6. A signal receiving method, performed by an access network device, comprising:
receiving a power saving response signal, wherein the power saving response signal indicates whether at least one main receiver or main transceiver of a terminal is woken up.

7. The method of claim 6, wherein the power saving response signal further indicates whether a corresponding main receiver or main transceiver is woken up.

8. The method of claim 6 or 7, further comprising:
sending scheduling information, wherein the scheduling information is used for scheduling transmission resources.

9. The method of claim 6 or 7, further comprising:
withholding from sending scheduling information, wherein the scheduling information is used for scheduling transmission resources.

10. The method of any one of claims 6-9, wherein the power saving signal is sent after waking up the at least one main receiver or main transceiver.

11. A signal sending apparatus, comprising:
a sending module, configured to send a power saving response signal, wherein the power saving response signal indicates whether at least one main receiver or main transceiver of a terminal is woken up.

12. A signal receiving apparatus, comprising:
a receiving module , configured to receive a power saving response signal, wherein the power saving response signal indicates whether at least one main receiver or main transceiver of a terminal is woken up.

13. A terminal, comprising:
a processor;
a transceiver connected to the processor;
wherein the processor is configured to load and execute executable instructions to realize the signal sending method according to any one of claims 1-5.

14. An access network device, comprising:
a processor;
a transceiver connected to the processor;
wherein the processor is configured to load and execute executable instructions to realize the signal receiving method according to any one of claims 6-10.

15. A communication system, comprising a terminal and an access network device, wherein the terminal is configured to implement the signal transmitting method according to any one of claims 1-5, and the access network device is configured to implement the signal receiving method according to any one of claims 6-10.

16. A computer-readable storage medium, wherein the readable storage medium stores an executable program code, and the executable program code is loaded and executed by a processor to implement the signal sending method according to any one of claims 1-5 or the signal receiving method according to any one of claims 6-10.
